# EUROPEAN PATENT APPLICATION

(11) **EP 3 258 572 A1**
(43) Date of publication of application: **20.12.2017**
(21) Application number: 14900291.7
(22) Date of filing: 31.10.2014
(51) Int. Cl.: H02K 1/27, H02K 21/22, H02K 1/28, B66D 1/12, H02K 9/04, H02K 5/16

(54) **LOW SPEED AND HIGH TORQUE ELECTRIC MOTOR OUTER ROTOR, ELECTRIC MOTOR AND RELATED CRANE**

(30) Priority: 21.08.2014 CN 201410414157; 21.08.2014 CN 201410414146
(71) Applicant: Jiangxi Gongbu Machinery Co., Ltd., Zhangshu, Jiangxi 331200 (CN)
(72) Inventor: YU, Liansheng, Zhangshu Jiangxi 331200 (CN); PENG, Zujun, Zhangshu Jiangxi 331200 (CN); YU, Lihao, Zhangshu Jiangxi 331200 (CN); YU, Lin, Zhangshu Jiangxi 331200 (CN)
(74) Representative: Roman, Alexis
(86) International application number: PCT/CN2014/089978
(87) International publication number: WO 2016/026214

(57) **Abstract**

The invention discloses an outer rotor suitable for low speed high torque permanent magnet synchronous motor, a low speed high torque permanent magnet synchronous motor with such an outer rotor and a high torque crane directly driven by such a motor and using the outer rotor (rotor shell) of the motor as its hoisting reel. The outer rotor is comprised of a cylindrical rotor shell, wherein the permanent magnets are regularly arranged in both circumferential and axial directions, the two circumferential sides of the permanent magnets are in the shape of an oblique plane with inner chamfering shape. The length of the permanent magnet in the axial direction is between 30-95mm, and the thickness of the permanent magnet is between 8-18mm, the motor is provided with an outer rotor, and both ends of the rotor shell are fixedly provided with a fixing plates, the stator slot on the stator core is a pear-shaped slot, the right end of the central shaft is fixedly arranged on the right rigid support with the anti-rotation structure. The crane uses the rotor shell of the motor as a reel of the hoisting mechanism used for connecting and winding the wire rope of the hoisting mechanism. The invention is advantageous for reducing the harmonic torque, simplifying the structure, running stable, small vibration, low noise and low temperature, and capable of normal operation at low speed (ultra low speed) high torque.

## Description

### TECHNICAL FIELD

This invention relates to an outer rotor suitable for low speed (ultra low speed) high torque permanent magnet synchronous motor, a low speed high torque permanent magnet synchronous motor with such an outer rotor and a high torque crane directly driven by such a motor and using the outer rotor (rotor shell) of the motor as its hoisting reel.

### BACKGROUND TECHNOLOGY

The existing motor comprises a rotor and a stator, usually adopt the structure of the inner rotor, also some adopt the structure of the outer rotor, and this kind of motor is called outer rotor motor. The stator core of the outer rotor motor is mounted on a fixed center axis, the iron core is embedded with a stator winding, and the rotor shell is tubular, surrounded on the outside of the stator; Permanent magnets are arranged on the inner wall of the rotor shell, and a rotating magnetic field is generated after the stator winding is electrified, interacting with the permanent magnets arranged on the inner wall of the rotor shell to drive the rotor to rotate. The existing motor runs well when the speed is high, but when it is necessary to operate at low speed (including ultra low speed), the negative effects of harmonic torque and cogging torque will become very obvious, resulting in temperature rise, vibration and noise increase, output decreased, When the temperature rises to a certain extent, the phenomenon of irreversible demagnetization may occur, these defects seriously hinder the application of outer rotor motor at low speed. However, many devices' actuators often need to operate at very low speeds, therefore, for high-speed motor, usually need to set up the deceleration mechanism, such as a common variable speed gear reducer, to meet the needs of the equipment for actuators. For example, for motor driving crane reel, often need to set up a large deceleration gear box, not only large volume, complex structure, high production cost and maintenance cost, but also brings unnecessary power consumption.

### SUMMARY

The first purpose of the present invention is to provide a kind of outer rotor, which can be used for low speed high torque permanent magnet motor, to form a good permanent magnetic field, help to reduce the harmonic torque, simplify the installation of the permanent magnet structure, improve the robustness and reliability of the permanent magnet, and is helpful to reduce the cost.

The second purpose of the present invention is to provide a ultra low speed high torque permanent magnet motor, which can operate normally at low speed (ultra low speed) and large torque, and has the advantages of stable operation, small vibration, low noise and low temperature rise.

The third purpose of the present invention is to provide a use of the ultra low speed high torque motor crane, hoisting mechanism, it does not need gear box, has small volume, low production cost and maintenance cost, and is easy to use, can be operated in high torque low speed (ultra low speed).

The technical scheme adopted by the invention is as follows:
An outer rotor motor, comprising tubular rotor shell, the inner wall of the rotor shell is provided with a plurality of permanent magnets, the permanent magnets use the same tile-shaped hexahedral structure, and the permanent magnets are regularly arranged in both circumferential and axial directions, the two circumferential sides of the permanent magnets are in the shape of an oblique plane with inner chamfering shape.

Preferably, the chamfer angle of the circumferential side of the permanent magnet is 5 to 35 degrees.

Preferably, the number of the permanent magnets arranged on any one of the circumferential or any axial directions is multiple.

Preferably, the permanent magnets are aligned in a circumferential direction along the circumference and are uniformly distributed and aligned along the straight line in the axial direction.

Preferably, the length of the permanent magnet in the axial direction is between 30-95mm, and the thickness of the permanent magnet is between 8-18mm.

**In** general, the two axial side surfaces of the permanent magnet are planar, and are positioned on the plane perpendicular to the axis of the center axis, and the adjacent permanent magnets on the axial direction are closely connected with each other(with on spacing or tiny spacing).

Preferably, the spacing between the adjacent permanent magnets is provided with a fixing strip with an axial extension, the fixing strip is fixedly connected with the rotor shell, and the circumferential sides of the fixing strip are respectively pressed on the circumferential side surface of the adjacent permanent magnet.

Preferably, the cross section shape of the fixing strip is rectangular, trapezoidal, circular or elliptical, and the fixing strip is fixed on the rotor shell by the way of screw fastening, sticking or inserting.

Preferably, a strip fastening clearance is left between the fixing strip and the inner wall of rotor shell, the fastening clearance of the strip is empty or the clearance is filled with non-magnetic binder, or a non-magnetic pad is arranged in the strip fastening clearance.

Preferably, the outer circumference of the permanent magnet cross section in the radial direction is centered and located on circular arc shape on the axis of the rotor shell, and the inner edge of the cross section of the permanent magnet in the radial direction is of any of the following forms:
(1) The inner edge is a circular arc, and the center of the arc is located on the axis of the rotor shell, and both ends of the inner edge are directly connected with the corresponding circumferential side of the cross section of the permanent magnet;
(2) The inner edge is a circular arc, and the radius is equal to the radius of the outer edge and the center of the circle is located on the extension line of the connecting line between the midpoint of the outer edge and the center of the outer edge, both ends of the inner edge are directly connected to the respective circumferential sides of the cross section of the permanent magnet;
(3) The inner edge is a circular arc, and the center is located on the axis of rotor shell, and both ends of the inner edge are connected to respective circumferential side edges of the cross section of the permanent magnet by a small concave circular arc;
(4) The inner edge is a circular arc, and the radius is equal to the radius of the outer edge, and the center of the circle is located on the extension line of the connecting line between the midpoint of the outer edge and the center of the outer edge, both ends of the inner edge are connected to the respective circumferential side edges of the cross section of the permanent magnet by a small concave circular arc.

**A** low speed high torque motor composing:
an outer rotor and a stator, the stator includes a central shaft, a stator core fixedly mounted on the central shaft and a stator winding fixedly mounted on the stator core, the outer rotor is an outer rotor according to an arbitrary rotor above, both ends of the rotor shell are fixedly provided with a fixing plate, the fixing plate is connected with the said central shaft through the corresponding rotor bearing, the right end of the central shaft is extended from the corresponding end bearing and
fixedly mounted on the right rigid support, the right rigid support is provided with a shaft mounting hole, the right end of the central shaft is inserted into the shaft mounting hole on the right rigid support and an anti rotation structure is arranged between the central shaft and the right rigid support.

Preferably, the stator core is provided with a stator slot for embedding the winding, the stator slot is a pear-shaped slot, the notch size is between 2.5-4.5mm, and the pitch of the winding is 1.

Preferably, the stator is provided with 8-pole/9-slot, 10-pole/12-slot, 20-pole/24-slot, 30-pole/36-slot, 22-pole/24-slot, 16-pole/18-slot or 32-pole/36-slot, the pole arc coefficient is 0.8-0.9, and the permanent magnet is made of Nd-Fe-B material with a length of 30-95mm and a thickness of 8-18mm.

Preferably, the stator is provided with a stator temperature sensor for collecting temperature signals in the stator.

Preferably, the motor is provided with an inner cooling structure, which comprises any one of the following cooling ducts or any combination of a plurality of cooling ducts:
(1) The center axis is a hollow shaft, and the shaft hole of the center axis constitutes an axially cooled shaft inner cooling duct;
(2) An annular gap is arranged between the outer side surface of the stator core and the inner surface of the outer rotor; the annular gap constitutes a stator external cooling stator external cooling duct;
(3) The stator core is provided with an axial through-hole, and the axial through-hole constitutes a stator inner cooling stator inner cooling duct ; an axial through-hole in the stator core is formed by the connection of a corresponding cooling air duct hole punched from stator punching sheet comprising the stator core;

The ventilation of the above-mentioned cooling ducts is natural ventilation and / or forced ventilation.

Preferably, the inner cooling structure uses any of the following forced ventilation structures:
(1) When the inner cooling structure is a shaft inner cooling duct, the shaft hole of the center axis is provided with a shaft inner ventilating fan, the shaft inner ventilation fan is a shaft inner breeze fan located on center axis hole at the air inlet end and/or shaft inner exhaust fan located on central shaft hole at the air outlet end;
(2)When the inner cooling structure includes a shaft inner cooling duct and includes the stator external cooling duct and / or stator inner cooling duct, the two ends of the stator core are respectively provided with a gap between the two ends of the stator core and the fixed plate at the corresponding end that constitutes the uniform pressure air gap zone of the end, the two ends of the stator external cooling duct and / or the stator inner cooling duct of the stator are respectively connected with the uniform pressure air gap zone of the end at the corresponding end, the side walls of both ends of the center axis are respectively provided with a shaft hole connecting with center shaft and side hole of center shaft connecting with the uniform pressure air gap zone of the end at the corresponding end, one end of the shaft hole of the center axis is closed, and the other end is provided with an shaft inner ventilation fan, the shaft inner ventilation fan is a shaft inner breeze fan located on center axis hole at the air inlet end and/or shaft inner exhaust fan located on central shaft hole at the air outlet end; the shaft inner ventilation fan is located at the outer side of side hole of center axis at the corresponding end;
(3)When the inner cooling structure includes a stator external cooling duct and / or stator inner cooling duct, and includes or does not include the shaft inner cooling duct, the two ends of the stator core are respectively provided with a gap between the two ends of the stator core and the fixed plate at the corresponding end that constitutes the uniform pressure air gap zone of the end, the two ends of the stator external cooling duct and / or stator inner cooling duct of the stator are respectively connected with the uniform pressure air gap zone of the end at the corresponding end, the fixed plate of the air outlet end is provided with an air outlet air duct connecting with the uniform pressure air gap zone of the end at the air outlet end, the quantity of the air outlet duct is one or more, the fixed plate of the air inlet end is provided with an air inlet air duct connecting with the uniform pressure air gap zone of the end at the air inlet end, the quantity of the air inlet duct is one or more, an air inlet air pump is connected in series with the air inlet duct, and an air inlet check valve is provided with the air inlet duct at both ends of the air inlet air pump, the air inlet air pump includes a cylinder body, and the cylinder body is axially installed in the corresponding fixing plate, the cylinder body is provided with a piston matched with the cylinder body, the piston is connected with a piston rod extending into the inner side of the fixing plate, the cavity of the cylinder body is divided into a rod cavity and a rodless cavity by the piston, the rod cavity is positioned on the inner side of the rodless cavity, the center axis is provided with multistage cam which is located in the uniform pressure air gap zone of the end at the inlet end and constitutes a cam mechanism with the piston rod, when the multistage cam rotates, the piston rod is pushed to move back and forth, the inlet and the outlet of the air inlet air pump are arranged at the bottom of the rodless cavity, when it also comprises a shaft inner cooling duct, the side walls of the center axis of the air inlet end and/or the air outlet end are respectively provided with a shaft hole connecting with center shaft and side hole of center shaft connecting with the uniform pressure air gap zone of the end at the corresponding end, the shaft hole of the center axis of the air inlet end is closed, partially closed or not closed.

Preferably, the left end of the rotor shell is connected with an encoder, and the connection mode is any of the following:
(1) The encoder is an outer rotor encoder, which comprises an inner sleeve and an outer sleeve connected with each other, the left end of the center axis is extended from the rotor bearing which is connected with the center axis and is fixedly arranged on the left rigid support, the left rigid support is provided with a shaft mounting hole, the left end of the center axis is inserted into the shaft mounting hole of the left rigid support and is provided with an anti-rotating structure for preventing relative rotation between the center shaft and the left rigid bearing, the inner sleeve is fixedly connected with the left end of the center axis, the outer sleeve is fixedly connected with the fixing plate at the left end, the center axis, the rotor shell, the inner sleeve and the outer sleeve are coaxial;
(2) The encoder is an inner rotor encoder and is provided with a stepped shaft and a bearing support for the connection, including inner and outer sleeves connected to each other, a stepped shaft for the connection is mounted on the bearing support through an outer bearing, the right end of the stepped shaft for the connection is provided with a radial flange, the radial flange is coaxially fixed on the fixed plate at the left end, the inner sleeve of the encoder is fixed on the left end part of the stepped shaft for the connection or is coaxially connected with the left end of the stepped shaft for the connection through a coupling, the outer sleeve of the encoder is fixedly connected with the bearing support through a connecting piece, the outer bearing is preferably a single row or double row aligning bearing.

Preferably, the rigid support (right rigid support and / or left rigid support) adopts any of the following:
(1) The mounting hole of the shaft on the rigid support is a polygon hole, and the center axis section of the corresponding end of the shaft that they are connected to is of the same polygonal shape, the shaft mounting hole is interference fit or transition fit with the center axis segment inserted therein, the corresponding polygonal structure constitutes anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(2) The mounting hole of the shaft on the rigid support is a cylindrical hole, the center axis section of the corresponding end is cylindrical, the rigid support is provided with a plurality of pins through holes penetrating the side wall of shaft mounting hole, the corresponding shaft segments of the center axis are provided with a plurality of pin blind holes respectively intervening with the plurality of pins through holes, the pin or pin shaft and its supporting structure constitute the anti-rotating structure;
(3) The mounting hole of the shaft on the rigid support is a cylindrical hole, the center axis section of the corresponding end is cylindrical, a plurality of keys are arranged between the shaft mounting hole and the center axis segment inserted into the shaft mounting hole, the key and its supporting structure constitute the anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(4) The mounting hole of the shaft on the rigid support is a drum hole, and the center axis section of the corresponding end of the shaft that they they are connected to is of the same drum-shape, the shaft mounting hole is interference fit or transition fit with the center axis segment inserted therein, the corresponding drum-shaped structure constitutes anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(5) The mounting hole of the shaft on the rigid support is a splined hole, and the center axis section of the corresponding end of the shaft that they they are connected to is spline shaft, the spline structure adopted between the two constitutes the anti-rotating structure.

Preferably, the stator is provided with a stator temperature sensor for collecting the temperature signal within the stator, the real time temperature in the stator is acquired by the stator temperature sensor, and the fatigue state of the motor is determined based on the collected real time temperature in the stator, and the upper limit of the operating temperature corresponding to the temperature acquisition portion of the stator temperature sensor is set, when the temperature measured by the corresponding stator temperature sensor reaches or exceeds the corresponding upper limit of the operating temperature, it is judged that the motor is tired and is controlled to stop, when the temperature measured by the corresponding stator temperature sensor is lower than the corresponding upper limit of the operating temperature, it is judged that the motor is not tired and the motor is allowed to work.

Preferably, the current signal acquisition device for on-line obtaining motor current is provided, the current signal acquisition device is a current sensor for collecting the current input signal of the stator winding and / or a frequency converter which can output the current output signal, the current signal acquisition device is used to obtain the current signal, the current signal is used as the load sensing signal or the load data is calculated and obtained by the current signal.

Preferably, the voltage signal acquisition device for on-line obtaining motor voltage is provided, the voltage signal acquisition device is a voltage sensor for collecting the voltage input signal of the stator winding and/or a frequency converter which can output the voltage output signal, the voltage signal acquisition device is used to obtain the voltage signal, and the voltage signal is used as the sensing signal of the rotating speed or the speed data is calculated and obtained by the voltage signal.

The present invention relates to a crane, which comprises an arbitrary ultra low speed high torque motor above. The rotor shell of the ultra low speed and high torque motor is used as a reel of the hoisting mechanism of the crane, which is used for connecting and winding the wire rope of the hoisting mechanism.

Preferably, the fixed plate at one end of the motor is connected with the rotary encoder, and the fixed plate of the other end is provided with a disc brake which is matched with the brake caliper device, this fixed plate constitutes a brake disc, a flange radially extending beyond the shell circumference of the outer rotor or a brake flange fixedly connected to the fixed plate matches with the friction block of brake caliper device.

The beneficial effects of the invention are as follows:
The outer rotor with tile-shaped permanent magnets regularly arranged in the circumferential and axial, is helpful to choose permanent magnet with suitable size and shape, and more than to optimize the magnetic field in the corresponding direction on the magnetic field distribution, by limiting the length of permanent magnet and some other methods significantly eliminate or restrain the influence of high harmonics, which is beneficial to avoid or reduce the distortion of magnetic field, also facilitate the processing and manufacturing; Due to the circumferential side of permanent magnets is set into a oblique plane and through the optimization of the chamfer angle design, can greatly reduce the distortion of magnetic field. According to the experiment, compared with the conventional design of the existing technology, the permanent magnet structure and combined with other optimization design of the invention, the distortion of the waveform of air gap magnetic field can reduce the rate of 50% - 80%, the air gap magnetic field waveform distortion rate control under 15% or 10%, the back EMF waveform distortion rate control under 10% or 8%; Thus, the operation stability of the motor is improved, the noise is reduced, the torque ripple is reduced and the torque output is increased; Due to the fixing strip extending in the axial direction, a plurality of permanent magnets can be pressed, which not only simplifies the installation process, convenient installation, and can adopt non-magnetic material suitable to form a fixing strip, to reduce the difficulty of processing, reduce technological requirements and ensure the quality of the installation of the permanent magnet, At the same time, it can avoid the negative effects caused by drilling on the permanent magnet, which is helpful to improve the electromagnetic performance of the motor; The inner edge of the permanent magnet cross section in the radial direction can use a variety of shapes, which is conducive to the realization of the optimization of electromagnetic properties, is conducive to flexible choice according to required motor performance and processing needs, especially through the shape of both ends of the inner edge are respectively provided with a small concave circular arc connected to the side of the corresponding, obviously improve the air gap magnetic field waveform, and reduce the distortion rate.

**Due** to the adoption of the outer rotor structure, the present invention is favorable for large torque output; Because the set of the stator temperature sensor, can obtain the true temperature inside the stator, the temperature relative to the existing technology of the motor surface temperature or motor base temperature, can more accurately reflect the degree of fatigue or motor effects on motor temperature rise, the temperature effect on the motor stator core mainly for different characteristics at different temperatures, and the stator core being up to a certain temperature limit is the main influencing factors and the necessary conditions; While the internal temperature and the surface temperature of stator motor is different between the two is not a strict linear relationship, so the temperature of stator temperature sensors can be more accurate and more timely to judge the fatigue state of the motor, to avoid the miscarriage of justice caused by inaccurate temperature, this has effectively and reliably guarantee the motor running at reasonable or safety temperature range, and avoid stop waste when the stator temperature does not reach the limit stop, also avoid the user ignore motor system leads to excessive temperature rise of motor stator for motor damage; For large torque output, such as when the motor is used for bridge gantry crane hoisting mechanism, interaction torque between rotor and stator at work can reach more than 200 KNM, shaft end installation fixed way using current technology is easy to appear not secured, to prevent relative rotation of the center axis and the support structure, the anti-rotating structure is arranged between the right end of the axis and the rigid support, effectively ensure the stability of the installation of the motor, avoiding the phenomenon of center shaft is easy to slip or rotate under the existing installation technology; Because of the cooling air channel is arranged at the inner of the motor, and can be cooled by forced ventilation mode, can greatly increase the cooling capacity, temperature control, especially because of the automatic air pump for ventilation, when the rotor rotates, the air pump automatically moves, and the air pump stops when the rotor stops, not only convenient for operation, but also no further access to the power; Due to the arrangement of the encoder, both the inner rotor and outer rotor encoder can be used to provide conditions for accurate rotor rotation and position signal acquisition through the encoder, to control the frequency inverter power supply performance is consistent with the real needs, improve the quality of operation; Because of the current and voltage sensors, and get the load signal through the current signal, speed signal obtained by a voltage signal, thus greatly reduces the difficulty of data collection, simplifies the control process of the control equipment; As a result of the rotor and the stator design optimization, the electromagnetic properties of the motor are greatly improved, in the implementation of the above optimization, the motor speed can be as low as 0.001r/min-30r/min, the torque density is more than 80kN • m/m3, instantaneous overload capacity can be up to 1.5-2.0 times of overload.

This kind of crane using outer rotor shell of low speed high torque motor directly as the wire rope reel lifting mechanism, can meet the requirements of operation without setting a deceleration device, thus greatly simplifies the structure, reduces material consumption, reduces production costs, improves the control precision, and reduces energy consumption.

### BRIEF DESCRIPTION OF THE DRAWINGS

Figure 1 is the overall structure of the ultra low speed high torque motor;
Figure 2 (a), 2(b) and (c) are the schematic diagrams of the present invention, involving the implementation of the cross section of the permanent magnet, respectively, of the three cases;
Figure 3 is an axial sketch of an example of the permanent magnet mounting structure of the present invention;
Figure 4 is an axial sketch of another example of the permanent magnet mounting structure of the present invention;
Figure 5 is a structure of the hollow shaft of the present invention;
Figure 6 is a schematic diagram of the cross section of several cooling ducts of the present invention;
Figure 7 is a schematic diagram of the cooling structure of the present invention;
Figure 8 is a schematic diagram of another cooling structure of the present invention;
Figure 9 is the schematic diagram of the third cooling structure of the present invention;
Figure 10 is the structure of the outer rotor encoder of the present invention;
Figure 11 is the structure of the inner rotor encoder of the present invention;
Figure 12 is a schematic diagram of a rigid support of the present invention;
Figure 13 is a schematic diagram of another rigid support of the present invention;
Figure 14 is the schematic diagram of the third rigid support of the present invention;
Figure 15 is the schematic diagram of the fourth rigid support of the present invention;
Figure 16 is the schematic diagram of the fifth rigid support of the present invention;
Figure 17 is the schematic diagram of the sixth rigid support of the present invention;
Figure 18 shows the relationship between the current I and the lifting load G (The electric motor is used for hoisting mechanism of the crane, the rotor shell of the motor is used as the wire rope reel of the hoisting system of the crane, and the steel wire rope is directly winded with crane hoisting as load);
Figure 19 is the relationship curve between the voltage U and the operating speed V (The electric motor is used for hoisting mechanism of the crane, and the rotor shell of the motor is used as the wire rope reel of the hoisting system);
Figure 20 is the structure of the hoisting mechanism of the crane of the present invention.

### DETAILED DESCRIPTION OF THE INVENTION

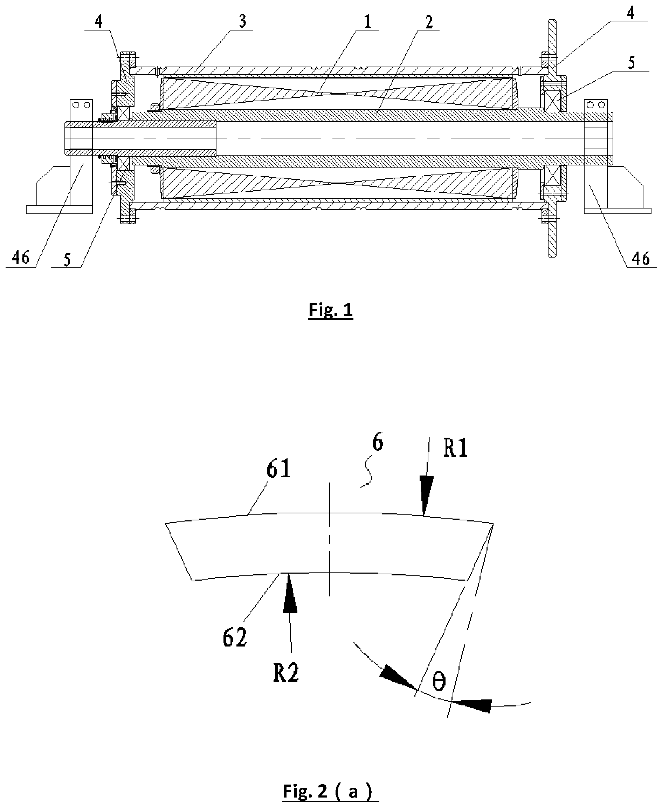

See figure 1-17, the invention discloses an outer rotor of a low speed high torque motor and a low speed high torque motor adopting the outer rotor, this motor is usually a three-phase permanent magnet synchronous motor, or a single-phase permanent magnet synchronous motor. The motor comprises a motor which is usually in the sense of itself, and also comprises an electric device which is additionally provided with other specific application functions on the basis of the structure and the working principle of the motor.

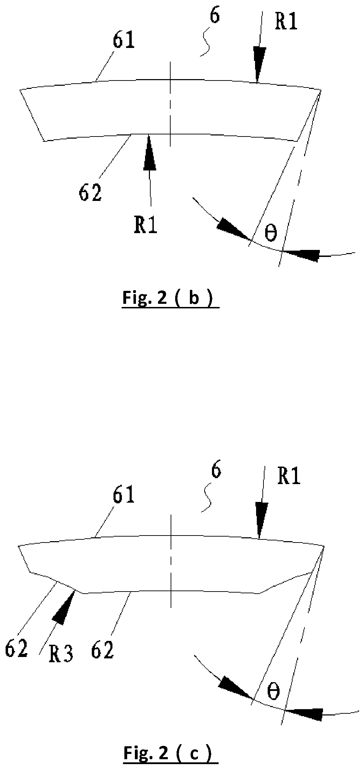

The ultra low speed high torque motor comprises an outer rotor and a stator located in the outer rotor (see Figure 1), the stator is mainly composed of a stator core 1, a stator winding and a center axis 2, the center axis can be a solid shaft or a hollow shaft, the stator core is fixedly arranged on center axis, the stator core is provided with a stator slot, and the stator winding is fixedly embedded in the stator slot, the outer rotor includes a cylindrical rotor shell 3 (usually referred to as an outer cylinder), both ends of the rotor shell are fixedly connected with a fixing plate 4, the fixing plate is connected with the center axis through a rotor bearing 5, and a plurality of permanent magnets 6 are fixedly arranged in the rotor shell, the plurality of permanent magnets are arranged in the same shape of the tile-shaped hexahedron and are arranged in two directions along the circumferential direction and the axial direction, the number of the permanent magnets arranged on any one of the circumferential or any axial directions is multiple, the two circumferential sides of the permanent magnet are in an oblique plane with an inner chamfering shape, and chamfer angle is 5-35 degrees (see Figure 2). When the stator winding is energized, the rotating magnetic field and the magnetic field generated by the permanent magnet interact with each other to drive the rotor to rotate synchronously, thus converting electrical energy to mechanical energy. With circumferential and axial regularly arranging a number of permanent magnets to form permanent magnet magnetic field, it is helpful to realize the optimization of the magnetic field structure, especially the adoption of the multiple permanent magnets along the circumferential direction, and the chamfer angle of the circumferential side of the permanent magnet is 5-35 degrees, greatly reduced the magnetic field waveform distortion rate; Due to the adoption of a plurality of permanent magnets on the axial direction, the length of the permanent magnet can be reduced, and the harmonic wave can be obviously eliminated or suppressed.

The regular distribution mode of a plurality of permanent magnets in the circumferential direction and the axial direction is aligned in the circumferential direction along the circumference and evenly distributed and aligned along the straight line in the axial direction, therefore, the present invention is not only beneficial to reasonably arrange the circumferential distribution and the axial distribution of the permanent magnets, the magnetic field is optimized, but also the structure is simple, and the present invention is convenient for processing, installation and maintenance.

The spacing between the adjacent permanent magnets is provided, which is beneficial to the optimization of the magnetic field and convenient installation.

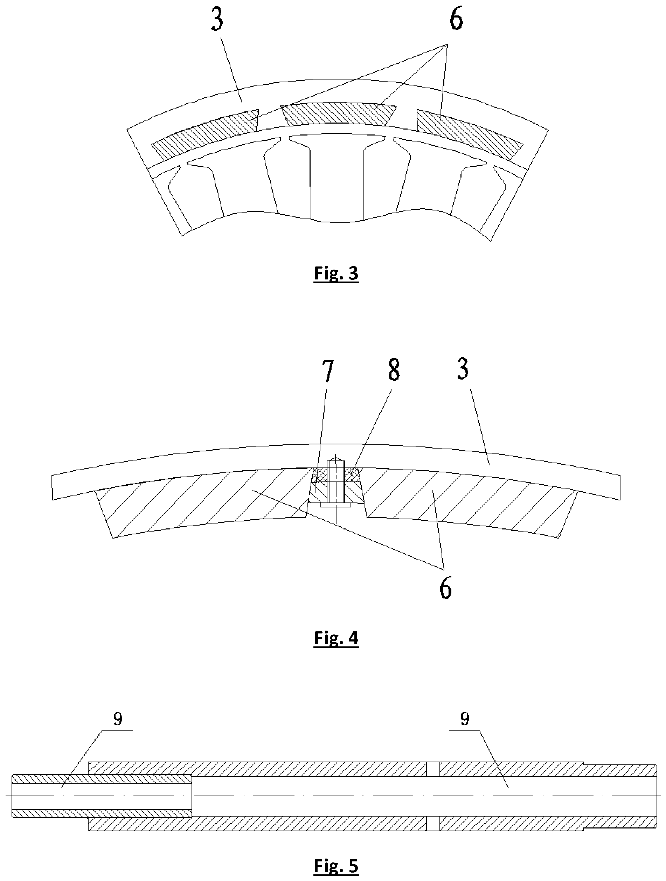

The permanent magnet can be used in any of the following ways in the installation and fixation in the rotor shell:
(1) See Figure 3, the inner surface of the rotor shell is provided with a plurality of axially extending dovetail slots and circumferential intervals, shape and size of which are corresponding to permanent magnet, the permanent magnet is embedded in a dovetail slot in the corresponding;
(2) See Figure 4, the circumferential extension of the permanent magnet is provided with an axially extending fixing strip 7 which is fixed on the rotor shell by screws and is pressed with the two sides of the permanent magnet.

For the above (1) installation, the permanent magnet embedded in the corresponding dovetail slot and the dovetail slot can be mutually bonded, For the above (2) installation, cross section of the fixing strip which is axial extension, is rectangular or trapezoidal, the spacing between the inner wall of the axial extension of the fixing strip radial outer face and the rotor shell can also be provided with a non-magnetic binder 8, thereby improving the installation firmness and will not have a negative impact on the magnetic field. The fixing strip is easy to be processed with a rectangular cross section, and the trapezoidal cross section can make the two sides closely fit with the corresponding side surface of the permanent magnet, which is benefit to the improvement of firmness and reliability.

For the above (2) installation, (That is, when the axial extending fixing strip is provided between the circumferentially adjacent permanent magnets), the axial extending fixing strips are fastened in the rotor shell through the screw and press to the two sides of the permanent magnets, cross section of the axial extending fixing strips is rectangular or trapezoidal, which can further improve the fastness of the mounting and further optimization of magnetic field.

Radial outward surface of the permanent magnets can be a cylindrical surface whose axis coincides with the axis of the center axis, Radial inner surface of the permanent magnets is a cylindrical surface whose axis is coincident with or parallel to the axis of the center axis, or a curved surface formed by a plurality of cylindrical surfaces whose axes are parallel to each other, the connecting lines of a plurality of cylindrical surfaces can be positioned on a cylindrical surface whose axes coincide with the axis of the center axis.

**As** a further preferred structure, the outer edge 61 (radially far away from the center axis edge) of the cross section (the section is perpendicular to the center axis) of the permanent magnet is a circular arc shape whose centre of the circle is on the axis of the center axis (,the axis of the center axis performs as a point on the plane of the permanent magnet cross section, the same below); the inner edge 62 (radially close to the center axis edge) in the radial direction of the cross section of the permanent magnet is a single circular arc shape or a curve formed by the connection of a plurality of sections of circular arcs; Through the optimization design of these curved surfaces, the air gap magnetic field waveform can be obviously improved, and the distortion rate can be reduced.

**Figure** 2 (a) - (c) gives several examples of the inner edge shape of the cross section of permanent magnets:
The example given in Figure 2 (a): The inner edge of the permanent magnet cross section in the radial direction is single arc shape, its center is located on the axis of center axis, the inside and outside edge radius are R1 and R2, a permanent magnet with the same thickness in the radial direction is formed, which makes the permanent magnet radial inner and outer surface are cylindrical surface which are coaxial with the rotor shell (The rotor shell is coaxial with center axis), and makes spacing between the outer surface of the permanent magnet in the radial direction and the inner surface of the stator is equal;
The example given in Figure 2 (b): The cross section of the permanent magnet has a single arc shape on the inner edge of the radial direction, and the radius of the permanent magnet is equal to the radius of the outer edge of the permanent magnet in the radial direction, which is R1, the center of the circle is on the straight line defined by the middle point of the outer edge of the permanent magnet cross section and the axis of center axis;
The example given in Figure 2 (c): The inner edge of the permanent magnet cross section can be in the shape of an example of Figure 2 (a), and may also be in the form of an example of Figure 2 (b), The present invention is characterized in that the inner edge of the permanent magnet cross section in the radial direction and the circumferential side of the permanent magnet cross section on the example of Figure 2 (a) and Figure 2 (b) are connected through a small concave circular arc (radius R3), instead of a direct connection or a convex fillet connection, so the edge harmonics can be reduced more effectively. The arcs on both sides play a similar " chamfering " effect, and are conducive to further reduce the torque ripple, optimize magnetic field, obviously eliminate or reduce the harmonic force for providing basic guarantee that motor work stably in low / ultra low speed, high torque.

The length of the permanent magnet (axial length) can be between 30-95mm, the thickness of the permanent magnet (when the permanent magnet is an unequal thickness structure, refers to the maximum thickness) between 8-18mm, thus, under the premise of ensuring the mechanical strength and the magnetic field strength, the influence of the harmonic wave can be obviously reduced.

The permanent magnet can be made of Nd-Fe-B to improve the magnetic performance.

**A** preferred permanent magnet material needs to meet the following conditions, so as to ensure the normal operation of the motor and improve the adaptability:
(1) The remanent magnetization is above 1.25T, and the intrinsic coercive force is between 20-30kOe;
(2) At 150-180 °C, the demagnetization curve is a straight line, which does not appear a demagnetization inflection point or appear a demagnetization inflection point, but the maximum demagnetizing working point bₘₕ is higher than that.

Therefore, the permanent magnet should select SH, UH or EH Nd-Fe-B material or other brands of Nd-Fe-B material whose performance is quite equal or better. The permanent magnet material with the above characteristics can eliminate the irreversible demagnetization risk of the permanent magnet of the traditional low speed and high torque motor, which is an important guarantee for the present invention to realize low speed or ultra low speed and high torque.

The stator slot can adopt a pear-shape slot, and the slot size k is between 2.5-4.5mm, and the pitch of the winding is 1, therefore, the stator magnetic field can be optimized to eliminate or reduce the harmonic, improve the frequency characteristics, increase the output, save the material and reduce the copper consumption.

The optimal pole arc coefficient of this motor is 0.8-0.9, the optimized pole slot is matched with 8-pole/9-slot, 10-pole/20-slot, 20-pole/24-pole, 30-pole/36-slot, 22-pole/24-slot, 16-pole/18-slot or 32-pole/36-slot, so as to obtain the optimized air gap magnetic field and to eliminate the cogging torque.

With the above improvements, the preferred example is combined with other supporting optimization devices (such as a high quality inverter), the distortion rate of the air gap magnetic field waveform of the motor can be reduced by 50% to 80%, and the air gap magnetic field waveform distortion rate is controlled below 15% or 10%, and the distortion rate of the back EMF waveform is controlled below 10% or 8%, thus, the operation stability of the motor is greatly improved, the noise is reduced, the torque ripple is reduced, the torque output is increased, and the temperature rise is controlled; Therefore, in the case of ultra low speed and high torque, the present invention can be operated normally, and is especially suitable for the hoisting mechanism and other similar occasions that the reel is direct driven (rotor shell as the reel).

**In** order to increase the cooling capacity, improve cooling effect, especially for some large heat output occasions, a cooling air duct can be arranged inside of the motor, and the natural ventilation or forced ventilation is adopted to directly cool the inner of the motor.

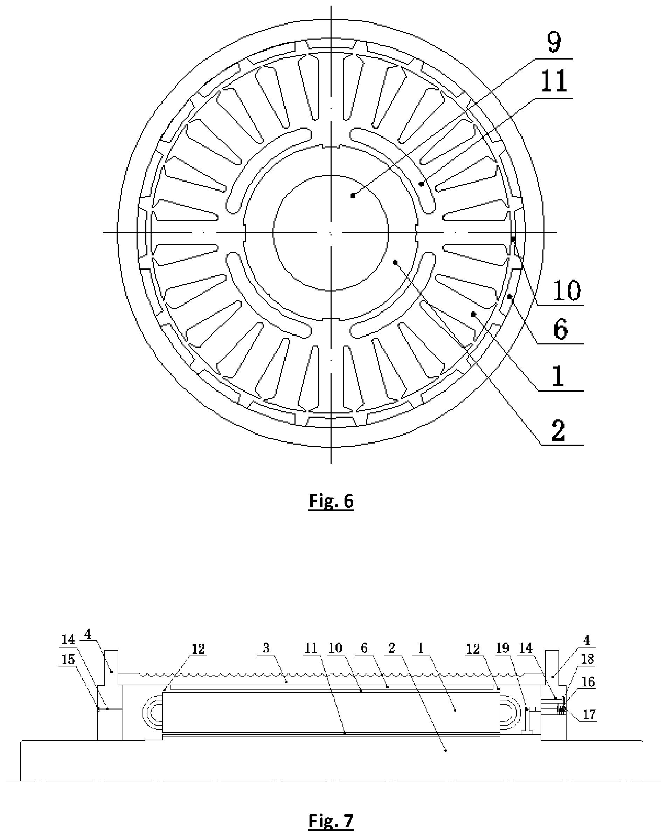

For example, one or more of the following internal cooling structures can be provided (see Figure 5-8):
(1)The center axis is a hollow shaft, and the shaft hole 9 of the center axis is formed into an inner cooling air duct for cooling the shaft (see Figure 5);
(2)An annular gap of stator inner cooling duct 10 is formed between the outer side surface of the stator core and the inner surface of the outer rotor (see Figure 6);
(3)The stator core is provided with an axial through hole which forms stator inner cooling duct 11 (see Figure 6).

The stator core can be composed by a plurality of stator punching plate with the same structure along the axial direction, in this case, the stator is punched several cooling duct holes to fold into the stator inner cooling duct, thus, the required stator inner cooling duct can be formed without increasing the process or the difficulty of the processing technology.

**A** plurality of cooling air duct holes on the stator punching plate can be uniformly distributed along the same circumference, so that the cooling effect can be equalized. When multi-layer cooling air holes are required, a plurality of cooling air holes on the stator punching sheet can be distributed along a plurality of circumference, and a plurality of cooling air holes of each circumference are evenly distributed.

**A** plurality of cooling duct stator punching holes distributed on the same circumference with the same shape and size are on the stator punching plate in the center of the arc-shaped strip hole center, which can efficiently enhance cooling area of duct as well as ensure stator core strength.

The distance between the cooling air duct hole of the stator punching plate and the inner edge (located at the edge of the center axis mounting hole) of the stator punching plate is less than the distance from the outer edge of the stator punching plate, thus, the overall cooling efficiency and the cooling capacity can be improved under the consideration of the stator external cooling duct and stator inner cooling duct.

When forced ventilation is required, any of the following forced ventilation structures can be adopted:
(1)When the center axis is a hollow shaft, the shaft hole of the air outlet end is an open hole, and an exhaust fan is arranged in the shaft, when the stator external cooling duct and / or stator inner cooling duct are arranged, the two ends of the stator core are respectively provided with a gap between the two ends of the stator core and the fixed plate of the corresponding end to form a uniform air gap zone 12, the two ends of the stator external cooling duct and / or stator inner cooling duct are respectively connected with the corresponding end of the uniform air gap zone, the side wall of the air outlet end of the center axis is provided with a shaft hole which is connected with the center axis and a center axis side hole 13 of the end of the uniform pressure air gap zone, the exhaust fan is arranged in the outer side of center axis side hole;
(2) when there is a stator external cooling duct and / or a stator inner cooling duct, the two ends of the stator core are respectively provided with a gap between the two ends of the stator core and the corresponding end of the fixed plate to form a uniform air gap zone 12 of the end part of the stator core, the two ends of the stator external cooling duct and / or the stator inner cooling duct are respectively connected with the air pressure gap zone at the corresponding end, the fixing plate of the inlet end is provided with inlet ducts, the number of the air inlet duct is one or more, an air inlet air pump is connected in series with the air inlet duct, and an air inlet one-way valve is arranged on the air inlet air duct at both ends of the air inlet pump, the inlet pump is comprised of a cylinder body, cylinder body is axially arranged on the fixed plate, matched with the piston which is connected with a piston rod extends to the inside of fixed plate, the cavity of the cylinder body is separated into rod cavity and rodless cavity by the piston, rod cavity is located on the inner side of rodless cavity, the center axis is provided with a multistage cam which is arranged at the end part of the corresponding end of the uniform pressure air gap and forms a cam mechanism with the piston rod, when the multistage cam rotates, the piston rod is pushed to move back and forth. The air inlet and outlet of the air inlet pump are arranged at the bottom of the rodless cavity. When it is also provided with a shaft inner cooling duct, the side hole on the center axis side wall will be provided to connect the shaft hole of center axis and air uniform gap zone of corresponding end, whereby the cooling duct can be connected with each other.

**The** followings are several cooling implementation method:
For example, the ventilation and cooling of the motor can be carried out by the stator external cooling duct and the stator inner cooling duct, in this case, the two ends of the uniform air gap zone 12 should be connected to the respective ventilation duct 14, The ventilation duct can be arranged on the fixed plate of the corresponding end and is connected with uniform air gap zone of the corresponding end (see Figure 7) to simplify the structure, reduce the wind resistance and improve the efficiency. The ventilation duct on one of the fixed plate (for example, the right fixed plate) is used as an air inlet duct; the ventilation duct on another fixed plate (such as the left fixed plate) is used as an air outlet duct. When forced ventilation is required, at least one air duct on the fixed plate is arranged with forced ventilation device. By means of the forced ventilation device (blast in and/or out), forms an air flow with the required air volume and pressure in stator external cooling duct and stator inner cooling duct. The heat on the stator core is sent out by the air flow through the heat exchange in the air flow of stator external cooling duct and stator inner cooling duct, thus achieving the purpose of efficient forced cooling. The stator external cooling duct and the end uniform air gap zone are the corresponding gap of motor, according to the needs of cooling and uniform pressure to improve the size and shape without the need to reset, so that to simplify the structure.

The quantity of the air inlet duct and the air outlet duct can be one or more. The number of the air inlet duct and the air outlet duct can be equal or unequal.

The air inlet duct and the air outlet duct are respectively arranged on the fixed plate at the corresponding end. An air outlet one-way valve 15 is arranged on the outlet air duct, and the forced ventilation device is an air inlet pump 16. The quantity of the air inlet air pump can be severeal, and is respectively connected with the corresponding air inlet duct, the air inlet ducts at both ends of the air inlet air pump are provided with a corresponding air inlet one-way valve (for example, an inlet valve 17, an exhaust valve 18, which is relative to the air pump). The actuation and operation of the air pump can be controlled by any suitable existing and other suitable technologies.

The air intake pump is comprised of a cylinder body, cylinder body is axially arranged on the fixed plate, matched with the piston which is connected with a piston rod extends to the inside of fixed plate, the cavity of the cylinder body is separated into rod cavity and rodless cavity by the piston, rod cavity is located on the inner side of rodless cavity, the center axis is provided with a multistage cam 19 which is arranged at the end part of the corresponding end of the uniform pressure air gap and forms a cam mechanism with the piston rod. The air inlet and the air outlet of the air inlet pump are arranged at the bottom of the rodless cavity, so that the rodless cavity forms a part of the air inlet duct, and achieves that the air pump connects to the air inlet duct. Generally, the top of the piston rod can be provided with a wheel which is matched with the cam, and the convex surface of the cam can also adopt a surface structure which is connected with the top arc and two inner arcs to reduce friction. When the motor works, the fixed plate rotates along with the outer rotor, and the piston rod of the air pump is driven by the multi-stage cam to move back and forth, and then the piston of the air pump is driven to move back and forth. With the movement of the piston, with the effect of the air inlet one-way valves on the inlet air duct on the two end of intake air pump, the external air enters into the rodless cavity, and then enters into the uniform air gap zone of the corresponding end, and then flows out from the air outlet of the other end through the stator external cooling duct and the stator inner cooling duct. According to the actual needs, it can meet the requirements of the air volume and wind pressure of the motor through the appropriate number of air pump (air intake ducts), the air pump parameters and the number of boss on the cam. The air pump does not need to be connected with an external power, starts to work automatically when the motor is operated, and stops automatically when the motor stops.

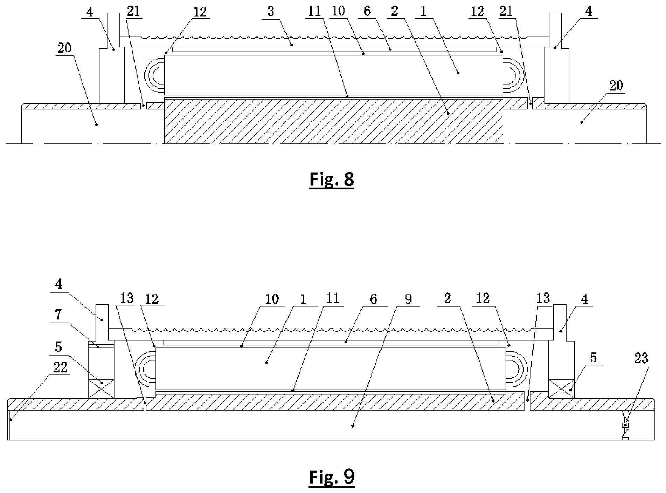

As an alternative method to both ends of the ventilation duct are on the fixed plate, the ventilation duct can also be arranged on the center axis of the corresponding end (Figure 8), or the ventilation ducts at one end is arranged on the fixed plate, and the other end is arranged on the center axis (Figure 9). The ventilating air duct arranged on the center axis is favorable for improving the adaptability to the forced ventilation device, simplifying the connection structure between the forced ventilation devices and improving the ventilation capacity. Ventilation duct in the center axis can be set with the axial hole 20 on the end of the center axis (equal to extending inward a certain length of the center axis hole from the shaft end) and the side hole 21 on the side wall of the axial hole on the center axis. The outer end of the axial hole is open, and the inner end is blocked (including the use of plugging pieces or set into blind holes). One end of the center axis side hole is communicated with the uniform air gap zone of the corresponding end, and the other end is communicated with the axial hole of the center axis.

When a breeze fan is used as a forced ventilation device, an air inlet duct is arranged on the center axis of the air inlet end. The air outlet of the breeze fan is communicated with an air inlet duct or is directly installed in the air inlet duct. The air outlet duct can be arranged on the fixed plate at the corresponding end, and can also be arranged on the center axis of the corresponding end. When the air outlet is arranged on the fixed plate at the corresponding end, the number of the air outlet duct can be more than one, so as to improve the ventilation capacity.

When an exhaust fan is used as the forced ventilation device, an air outlet duct is arranged on the center axis of the corresponding end. The air inlet duct of the exhaust fan is communicated with the air outlet duct or a suitable exhaust fan is directly arranged in the air outlet duct. The air inlet duct can be arranged on the fixed plate at the corresponding end, and can also be arranged on the corresponding end of center axis. When the air inlet duct is arranged on the corresponding end of the fixed plate, the quantity of the air inlet duct which is arranged on the corresponding end of the fixed plate can be more than one, so as to improve the ventilation capacity.

For the above-mentioned cooling method that the air inlet and outlet ducts are provided on the center axis, if the air inlet duct on the center axis is communicated with the air outlet duct (actually through the center axis hole), so that formed cooling duct inside of the center axis, and the size of the center axis side hole 13 of the inlet end and the outlet end is appropriately set, so that the air flow of the outside and inside cooling duct of stator and cooling duct inside of the center axis meet the requirements. By this, we can simultaneously achieve the purpose of cooling of the outside and inside cooling duct of stator and cooling duct inside of the center axis.

As shown in Figure 9, The inlet end of the center axis hole is blocked (closed) by the blocking plate 22, the center axis hole of the outlet end is provided with a induced draft fan 23 or is connected with a induced draft fan. After the induced draft fan starts, the external cold air get into the spacing of the uniform pressure air gap of the end part from the air inlet duct of the inlet end fixed plate, part air go through the external cooling duct ,get into the spacing of uniform pressure air gap of the outlet end part, and then, through the corresponding end side hole of the center axis enters the center axis hole, the other part enters the center axis hole through the center axis side hole of the air inlet end, flow through the center axis hole to outlet end, The two parts of the air flow join in the center axis hole of the air outlet end, and is send out of the center axis by the induced draft fan, so the forced air cooling is formed on the outer surface of the stator and the inside of the center axis, thus achieving the purpose of efficient forced cooling.

The encoder of the motor may adopt an outer rotor encoder, or a common internal rotor encoder.

Typically, the encoder is a rotary encoder, including an inner sleeve 24 and an outer sleeve 25 which rotatable connected to each other, the inner sleeve and outer sleeve have a gap between each other. On the inner sleeve and outer sleeve, there is corresponding position sensing elements to ensure rotation of the outer sleeve relative to the inner sleeve to obtain a corresponding sensing signal.

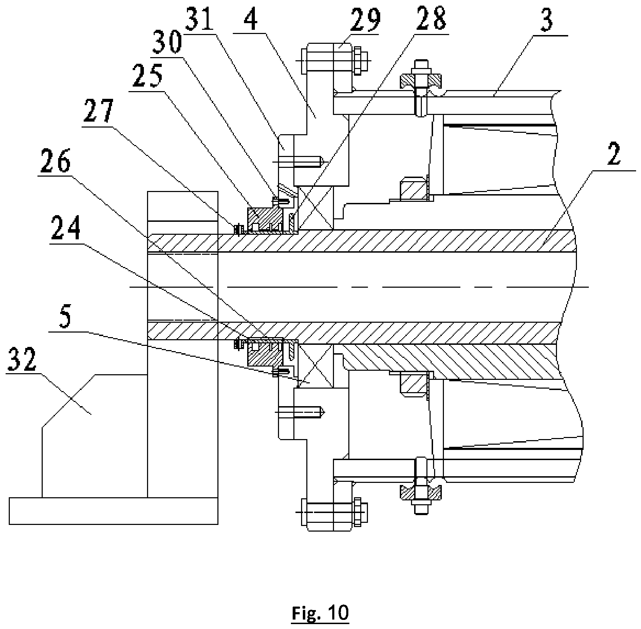

When the encoder is an outer rotor encoder mounted at the left end of the rotor shell (See Figure 10), the inner sleeve is connected to the center axis extending from the left end and fixed to the center axis, the outer sleeve is connected to the rotor shell(can be fixed directly or indirectly by means of other structural members), the center axis, rotor shell, inner sleeve and outer sleeve are coaxial. When working, the inner sleeve is fixed together with the center axis, and the outer sleeve rotates synchronously with the rotor shell. The angular displacement, rotation speed, rotation acceleration and other parameters of the outer sleeve are exactly the same as that of the rotor shell, which is favorable to ensure the reliability of the detection data and improve the detection precision.

The method that the inner sleeve connected with the center axis can be sheathed on the center axis, and the coupling key 26 is provided between the inner sleeve and the center axis. This connection method has the advantages of simple structure, convenient installation and good reliability.

The left end of the center axis is a stepped shaft for connecting the inner sleeve, the right end of the inner sleeve is positioned by a corresponding rabbet on the stepped shaft, the left end of the inner sleeve is positioned by a retaining ring 27 fixed on the stepped shaft. Thereby the positioning and fixing of the inner sleeve on the axial direction is ensured by a simple structure.

The stepped shaft may also be connected with a spacer 28, the spacer is located between inner sleeve and rabbet which is located on the left side of inner sleeve for positioning, the right end of spacer is in contact with the end face of rabbet, the left end of spacer is in contact with the end face of inner sleeve, the right end of retaining ring is in contact with the end face of inner sleeve. The present invention is suitable for positioning the inner sleeve in an appropriate axial position through the setting of the spacer.

The sleeve can be composed of a sleeve, the sleeve is provided with an annular baffle on the axial center, the annular baffle is located on the left side of the rotor bearing, and the outer diameter is larger than the inner diameter of the rotor bearing, so the corresponding end of the rotor bearing can be protected.

The outer edge of the fixing plate at the left end is fastened on the annular flange 29 of the corresponding port of the rotor shell by bolts, The inner circle of the fixing disk is fixedly connected with the outer ring of the corresponding rotor bearing, thereby effectively achieving the plugging of the left end port of the rotor shell and the connection between the rotor shell and the rotor bearing.

Due to the technical background, the outer diameter of the bearing, which can normally be used as the rotor bearing, is larger than that of the outer sleeve, and therefore, the outer sleeve is provided with an outer sleeve flange 30,the outer sleeve is located on the left side of the flange plate31, and is fixed to the inner edge portion of the connecting flange by bolts, the connecting flange plate is located on the left side of the fixed plate, the outer edge of the connecting flange plate is fastened to the inner edge of the fixed plate by bolts. Thereby achieve a fixed connection between the outer sleeve and the rotor shell. So it is convenient and effective to solve the problem that the outer sleeve of the encoder cannot be directly connected with fixed plate due to factors such as the size and position.

**In** the installation of the outer rotor encoder, the left and right end of the center axis are mounted on the corresponding left rigid support 32, the left rigid support is mounted on the outside of the encoder of outer rotor, so it is not only facilitates the installation of the encoder, simplifies the connection structure, but also easy to use and maintain.

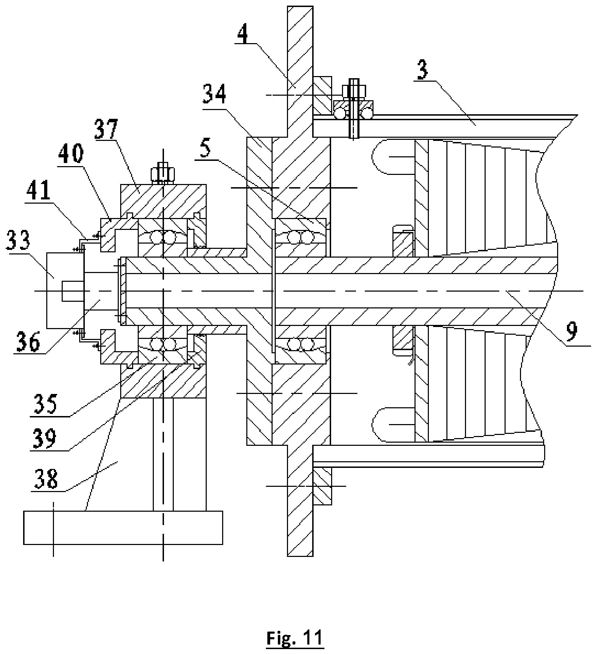

When the encoder is the inner rotor encoder 33 which is installed on the left of the rotor shell (see Figure 11), a small aperture inner rotor encoder is commonly used, the small aperture inner rotor encoder is provided with a connecting step shaft and bearing support, connecting stepped shaft is mounted on bearing support by means of an outer bearing 35, the right end of said connecting stepped shaft is provided with a radial flange, the radial flange is coaxially connected to left fixed plate 4. The inner sleeve of the encoder is fixedly connected to the left end of the stepped shaft or is coaxially connected to the left end of the stepped shaft by means of a coupling 36 or the similar connector. The outer sleeve of the encoder is fixedly connected to the bearing support by means of a connector. Since the inner sleeve of the encoder is coaxially connected to the rotor shell 3 by means of a stepped shaft, the outer sleeve is fixed by the corresponding connector, whereby the inner rotor coder of the conventional technique can be used for the detection of larger diameter outer rotor motors, such as the ultra low speed high torque motors disclosed in the present invention.

The bearing support is preferably formed by butt joint of the upper seat 37 and the lower seat 38, and the upper seat and the lower seat are fastened together by bolts to facilitate the processing, installation and maintenance

The outer bearing is preferably a single row or double row self-aligning bearing to improve the bearing performance.

The bearing support is provided with a retaining ring 39 and a bearing cover 40 for axially restricting the outer ring of the bearing, the retaining ring is located on the right side of outer bearing, the bearing cover is on the left side of outer bearing, retaining ring and bearing cover are spaced from connecting stepped shaft to achieve a reliable location and avoid obstruction to the connecting stepped shaft.

The diameter of each shaft on the connecting stepped shaft is decremented from right to left to accommodate the mounting dimensions of the corresponding parts of the rotor shell and the encoder.

The stepped shaft can be a solid or hollow rotary structure. When the hollow structure is adopted, the threading and ventilation can be carried out through the middle hole.

The connecting member between the encoder outer sleeve and the bearing support includes a profiled flange 41 for transition connection, the both ends of the profiled flange respectively are an outer annular connecting portion and an inner annular connecting portion, the portion between the outer annular connecting portion and the inner annular connecting portion is in the form of a cylindrical shape having annular steps, the outer annular connecting portion is located at the right end of the profiled flange and is connected with the bearing cover, inner annular connecting portion is located at the left end of profiled flange and connected to the mounting flange on outer sleeve. Therefore, it is not only adapts to the requirement of the axial position and the radial dimension of the corresponding parts of the motor and the encoder, but also plays an effective role in protecting the external bearing parts.

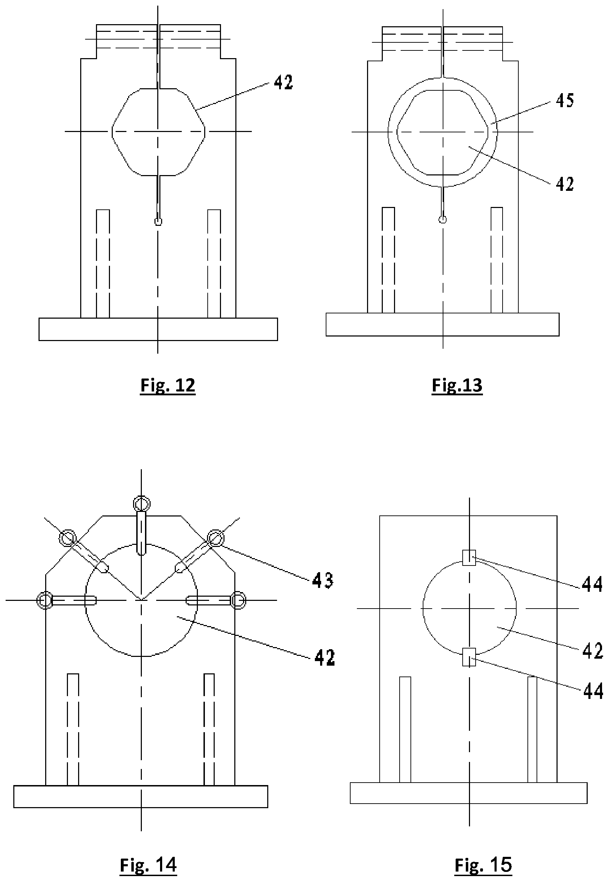

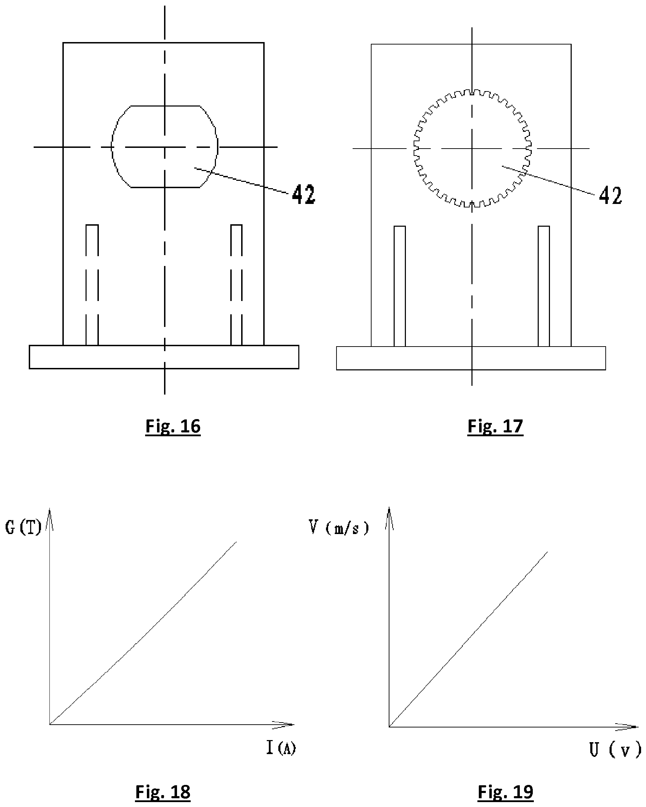

The rigid support (right rigid support and, if any, support at the left) can use any suitable form, since the friction between the cylindrical optical axis and the cylindrical light hole is limited, when the center axis torque is large, it is easy to slip. Thus, the mating center axis section and the shaft mounting hole 42 may be arranged in a non-circular shape, such as a polygonal hole (see Figurel2) and a drum hole (Figure 16), or make the pin 43 or bolt radially passed through the hole (see Figure 14) on the rigid support and the center axis so that a portion is within the rigid support and the other portion is located within the center axis, thereby preventing the center axis from rotating relative to the rigid support, It is also possible to provide the shaft mounting hole as a spline hole (see Figure 17) or by providing a coupling key 44 (see Figure 15) between the center axis and the shaft mounting hole to prevent the center axis from rotating relative to the rigid support.

The shaft mounting hole can be directly arranged on the rigid support, i.e. on the body of the rigid support, preferably the rigid support may be formed by the body of a rigid support and an adjusting sleeve 45, the shaft mounting hole is arranged at the center of the adjusting sleeve, and the outer side of the adjusting sleeve is cylindrical, the body of the rigid support is provided with an adjustment sleeve mounting hole corresponding to the outer edge of the adjustment sleeve, The adjusting sleeve is inserted into the mounting hole, and the adjusting sleeve mounting hole transition or interference fits, and the fastening bolt is arranged or not. The adjustment sleeve and the center axis can be installed as a whole and mount to the adjustment sleeve mounting hole of the body of the rigid support, and the adjusting sleeve mounting hole is a cylindrical hole, the center axis is convenient to align, reducing the difficulty of adjusting the circumferential angle of the center axis during installation and the coaxial adjustment difficulty of the two rigid bearings, and also reducing the machining requirements of the rigid bearing and the center axis journal. When both ends of the center axis are installed on the rigid support, at least one rigid support is usually provided with a rigid support with an adjusting sleeve.

The number of the stator temperature sensors is one or more, and the position of the stator temperature sensor (which refers to the position of collection temperature, corresponding to the temperature collecting site) is one or more. Thus, the number and the installation position of the stator temperature sensor can be flexibly arranged according to different requirements, as well as the convenience of processing and operation.

For example, the stator temperature sensor can be arranged at any of the following positions:
a) The stator temperature sensor is arranged in a stator slot on stator core between the corresponding stator slot wall and the winding in stator slot, whereby the temperature collected substantially reflects the temperature of the stator core, it can be treated as the temperature of the stator core;
b) A stator temperature sensor mounting hole is arranged in the stator core, the stator temperature sensor embedded in the stator temperature sensor mounting hole, which can more accurately capture the internal temperature of stator core, the stator temperature sensor mounting hole can be arranged at the highest temperature part of the stator core, in order to obtain the highest temperature on the stator core, avoid the failure of these parts due to the temperature exceeding the upper limit of the operating temperature of the core due to the fact that the internal temperature of the stator core collected is lower than its maximum temperature. In general, the stator temperature sensor mounting hole can be punched out in the punching process of the corresponding iron core sheet;
c) The stator temperature sensor is arranged inside the winding of the stator slot of the stator core, and the inner temperature of the winding can be directly collected. Based on the same reasons as above, the stator temperature sensor arranged in the winding is preferably set at the highest temperature position in the winding;
d) The center axis may also be equipped with or without a stator temperature sensor to collect temperature of the center axis; the temperature of the center axis can be obtained by using a stator temperature sensor for collecting the center axis temperature so as to compare the temperature gradient changes on the motor with other temperatures, and can be used as a control basis or after correction when the control requirements are relatively low.

**If** the temperature measuring probe is placed on the motor bearing or the motor shell for temperature measurement, it cannot reflect the internal heat and temperature of the motor. In particular, in the case of outer rotor permanent magnet synchronous motors, the copper loss of the stator windings and the iron loss of the stator core are the main causes of heat generation, which first cause the temperature rising of the stator core and the stator windings and reach shell or bearing through a longer path, so the temperature measured from the shell or bearing cannot truly reflect the temperature inside the stator, is not conducive to make accurate judgment on the status of the motor, and is not conducive to precise control of motor. In addition, because people define motor working level through time test, but in the actual operation process, users generally do not count the motor running time, after running to the maximum working time defined by the work level, there is often a phenomenon that the motor is not stopped and continue to run. If people do not grasp the internal temperature of the motor, easily lead to accidents, and if the work is entirely based on the work level, although it can usually ensure safe operation, but often the motor does not meet the internal temperature that the motor should be shut down cause the motor utilization rate decreased, affects the working efficiency. Therefore, through the stator temperature to determine the motor fatigue and the degree is more accurate. We can set the upper limit of the operating temperature corresponding to the temperature acquisition site on the stator. When the collected temperature reaches or exceeds the corresponding upper limit of the operating temperature, the motor is judged to be fatigue and control to shutdown. When the collected temperature is lower than the corresponding upper limit of the operating temperature, the motor is judged to be not tired and the motor is allowed to operate.

When the temperature collected by the stator temperature sensor is lower than the corresponding upper limit of the operating temperature, calculate the maximum working time of the motor up to the corresponding operating temperature upper limit, permit it as the maximum allowable time for the motor to continue to work, So that users can master the actual situation of the motor, and be aware of the follow-up work time motor. The calculation of the maximum time can be calculated according to the set program, periodicity or under certain conditions and can also carry out the corresponding temperature acquisition and calculation based on manual input instructions.

This motor can also be arranged for getting motor current online with current signal acquisition device and / or getting motor voltage online with voltage signal acquisition device. The current signal acquisition device is a current sensor for collecting a current input signal of the stator winding and / or a frequency converter which can output the current output signal, the voltage signal acquisition device is a voltage sensor for collecting the voltage input signal of the stator winding and / or a frequency converter which can output the voltage output signal, When the two signals are obtained through the frequency converter, the frequency converter output current and voltage signals can be the same. Get the current signal through the current signal acquisition device, the current signal is used as the load sensing signal or the current signal is calculated and the load data is obtained. Get the voltage signal through the voltage signal acquisition device, use the voltage signal as the rotation speed sensing signal or the speed data is calculated and obtained by the voltage signal.

The principle of using current signal and voltage signal to determine motor load and motor speed respectively, are as follows: The vector control of the permanent magnet synchronous motor is carried out by Id=0, under the function of the controller, the stator winding current (i.e. stator current) is only the pure torque current Iq, without excitation current Id. When the motor operates in this mode, there is a positive correlation between the load of the motor and the winding current and between the speed of the motor and the winding supply voltage (i.e., the stator voltage). Therefore, the direct acquisition of the motor voltage information and the current information is equivalent to knowing the motor running speed and the motor load. Compared with the existing technology under a variety direct detection method of motor speed and motor load, it is more reliable and more simple and fast to achieve.

Figure 18 shows the current load curve of a high torque low speed permanent magnet synchronous motor which is used for crane gearless lifting mechanism in the above-described vector control state, corresponding to the determined load (hoisting) at any given current. Therefore, according to the winding supply current, motor hoisting can be calculated. It is also possible to directly use the acquired current signal as a sensor signal for realizing the hoisting according to the actual needs. In the motor / crane overload control, the current signal threshold of the hoisting overload is set according to the relationship between the hoisting and the current. When the acquired current signal reaches or exceeds a given current signal threshold, the overload protection action is started and the motor stops working, which greatly facilitates the lifting signal acquisition and motor overload confirmation, greatly simplifies the data processing capacity, avoid the defects of hoisting data distortion and hoisting overload control not accurate, and also help to reduce and eliminate the safety hazard due to shielded weighing instrument.

Figure 19 shows the voltage / speed curve of a high torque low speed permanent magnet motor used for crane gearless lifting mechanism in the above-described vector control state. The curve is a rising single curve, at any definite voltage corresponding to the determined motor running speed, so motor speed can be calculated according to the winding supply voltage, It is also possible to directly use the collected voltage signal as a sensor signal and send to corresponding monitoring device for reflecting the running speed to monitor or control the running state of the motor according to the actual needs. When the maximum speed of the motor needs to be limited, the voltage threshold of the motor over-speed is established according to the relationship between the motor speed and the voltage, when the acquired voltage signal reaches or exceeds a given voltage signal threshold, the over-speed protection action is initiated, thereby providing a convenient way for on-line detection of the motor running speed.

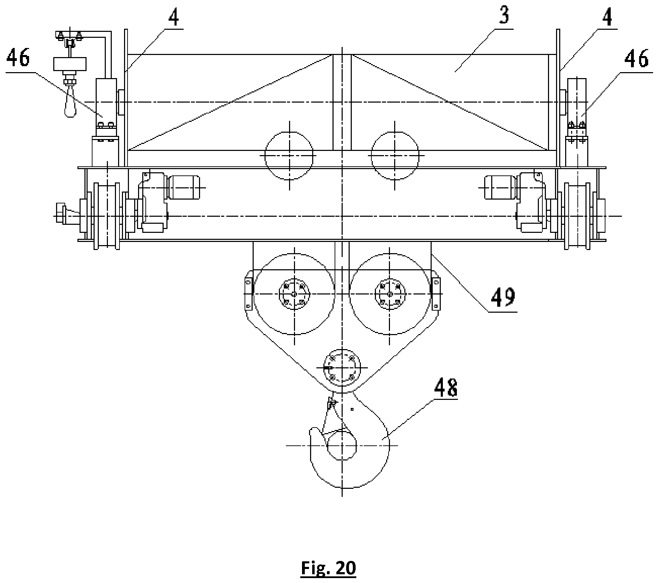

As an important application of the invention can be used as a motor of the hoisting mechanism of crane hoisting motor, the wire rope 49 of the hoisting mechanism is directly winded by the rotor shell of the motor, so as to eliminate the large gear box which is arranged for the speed reduction transmission. Figure 20 shows the implementation case of crane in this application. The crane includes a frame composed of a left and right end beams and balanced beams connected to the left and right end beams, a hoisting motor and a wire rope winding mechanism. The left and right end beams are respectively provided with a corresponding active wheel / active wheel group and a passive wheel / passive wheel group, the active wheel / active wheel group is provided with a wheel drive motor, the hoisting motor adopts ultra low speed high torque motor which is disclosed by present invention. The hoisting motor is mounted on the left and right end beams through rigid supports 46 at left and right ends, an anti rotation structure is arranged between the rigid support and the mounting shaft of the motor to prevent the relative rotation of the two, The mounting shaft is usually a center axis of the motor and is fixedly connected with the rigid support, the rotor shell 3 of the motor is used for winding the wire rope, and is the winding drum of the wire rope winding mechanism, the wire rope winding mechanism also comprises a pulley block matched with the wire rope, the pulley block is composed of a movable pulley and a fixed pulley, The number of the fixed pulley and movable pulleys are respectively one or more, the fixed pulley is mounted on balance beam, the movable pulley is arranged in the movable pulley bracket, the movable pulley bracket is provided with a movable pulley spindle, The movable pulley is arranged on the movable pulley spindle through a bearing or a shaft sleeve, a hook 48 is arranged on the movable pulley bracket. Since the outer rotor of the hoisting motor is directly used as a reel, eliminates the gearbox of current technique, which not only avoids the defects caused by the gearbox, but also can make full use of a variety of superior performance of outer rotor permanent magnet synchronous motor, especially low speed (including ultra low speed) high torque outer rotor permanent magnet synchronous motor.

The fixed plate at one end of the hoisting motor is connected with a rotary encoder, whereby the position information and the motion information of the outer rotor can be collected by the rotary encoder, the fixed plate at the other end is provided with a brake caliper device for supporting the disc brake. The fixed plate constitutes a brake disc of the disc brake, a disk body extending radially beyond the outer rotor shell (Which may also be a brake flange fixedly connected to the fixed plate of the corresponding end) matches with the friction block of caliper device. Thus, the work of the hoisting motor can be controlled. The brake and/or the position maintaining of the brake of the lifting motor is carried out by the disc brake. The disc brake is preferably an electromagnetic disc brake for ease control. Since the fixed plate which is arranged at one end of the rotor shell, is connected to the encoder directly and the other end of the fixed plate is directly used as the brake disc of the clamp brake, it is not only simple in structure but also improved in accuracy and reliability.

The present invention called tile-shaped hexahedron refers to the main part is similar to the tile, including two radial surfaces, two circumferential surfaces and two axial surfaces. The two radial surfaces and the two circumferential surfaces are mutually connected with each other to form a side surface of the cylinder, and the two axial surfaces forms the top and bottom surface of the cylinder and are similar to sector. Any edge of the cylinder can be formed by planes intersection, curved surface intersection, a plane and a curved surface intersection and can also be smooth transition surface or any other suitable structure.

The present invention relates to a surface of a permanent magnet which is an oblique plane of inner chamfering shape, it means the state that the radial medial side tilts to the middle of the inner surface of the permanent magnet.

The present invention relates to the two circumferential sides chamfering angle of the permanent magnet is based on the connection between the two ends of the outer edge of the cross section of the permanent magnet and the axis of the center axis, is the angle between the circumferential side of the cross section of the permanent magnet and the above connection line of the corresponding side.

The present invention relates to a concave circular arc whose bending direction reduces the volume or area of the entity, relative to its entity.

The numerical range "A-B" of the present invention comprises two terminal values of A and B.

The present invention refers to a method for inserting a part of the other part into the slot through a slot arranged on one of the two objects so as to connect the two parts.

The present invention relates to a center axis, and an extension direction of the rotor shell and the stator, unless otherwise stated, the two ends or the left and the right ends are the two ends of the center axis along the axis direction. The "left" and "right" is limited only to the convenience, are expressed either end along the center axis of the axis and the other end opposite, avoid unclearness at both ends of the confusion, does not constitute a restriction on the actual use of the right and left direction.

The present invention relates to a bearing which is connected with a rotatable movable connection through a bearing.

The structure of the present invention comprises a structure formed by a piece and a structure formed by a plurality of parts, and the mentioned structure between two parts is refers to the structure of influencing the connection or interaction mode of two parts, including the two parts or any parts of the formation of the structure itself, including the structure formed after increasing other parts.

The cylindrical surface of the present invention is a part of curved surface of the cylindrical surface, the axis of cylindrical surface is the axis of cylinder corresponding to the cylindrical surface.

The present invention called for circumferential is along the circumferential direction, for any one point on the circumference, it is the tangent direction of the point, and the radial direction is along the diameter of the circle, the axial is the extension mode along axis of the center axis or parallel to the center axis. Unless otherwise stated, when it comes to permanent magnets or relates to a rotor shell and the stator and its parts, the called circumference of the axial and radial is the circumference that is on a plane perpendicular to the axis of the centerline, and whose center is on the centerline.

The outer and inner parts of the present invention are relative concepts, and in the radial direction, the direction close to the center axis is inner side, and the outside is opposite. In the axial direction, the direction extending to both ends of the center axis is outside, and the inner side is opposite, For example, the stator core is located on the inner side of the fixed plate.

The annular gap of the present invention is that the cross section of the gap is annular.

The present invention relates to an exhaust fan which is used for extracting air, and can be selected according to the factors such as temperature, air volume and resistance.

The polygonal hole or the drum shaped hole in the present invention refers to a hole whose cross section is a polygon or a drum shape. Similarly, a polygon column (or other three-dimensional structure) or a drum shaped column (or other solid structure) means the cross section of what is polygon or drum shape (or three-dimensional structure). The drum shape is composed of two parallel straight line segments and two arcs which are respectively connected with the same end points on both sides of the two straight lines. Two arcs is the outward convex arc with respect to the graph, the graph is mirror symmetry with respect to the connection of the midpoints of the two straight lines; The graph is also mirror symmetry with respect to the connection of the center of the two arcs.

The steel wire rope of the present invention comprises a flexible rope which is twisted by a plurality of strands or a plurality of fine steel wires, and also comprises common purpose rope that is made of any other suitable material.

The trapezoid of the present invention comprises the trapezoid of the geometry and the outline is similar to the shape of the trapezoid of the geometry, it is composed of four edges, and the upper and the lower edge lines can be curved, and the connecting positions of each line can be in an angular shape, and can also be a smooth transition curve. Similarly, the rectangle includes the trapezoid of the geometry and the outline is similar to the rectangular shape of the geometry.

The additional technical features of the dependent claim requirements of any independent claims are as independent optimization techniques, which can exist alone, and can also be combined with other additional technical features of other dependent claims of the same independent claim, unless the additional technical feature(s) of one dependent claims is a further limitation of (an) additional technical feature(s) of another dependent claim.

**In** addition to the fact that the present invention is explicitly documented or it can be concluded that any choice of the technical means of the present invention depends on the other technical means based on common knowledge, the present invention can form the corresponding technical scheme through the combination of any determine of technical means.

## Claims

1. An outer rotor of motor, comprising a cylindrical rotor shell, wherein the inner wall of the rotor shell is provided with a plurality of permanent magnets, the permanent magnets use the same tile-shaped hexahedral structure, and the permanent magnets are regularly arranged in both circumferential and axial directions, the two circumferential sides of the permanent magnets are in the shape of an oblique plane with inner chamfering shape.

2. The outer rotor according to claim 1 in which the chamfer angle of the circumferential side of the permanent magnet is 5 to 35 degrees.

3. The outer rotor according to claim 2 in which the number of the permanent magnets arranged on any one of the circumferential or any axial directions is multiple, the permanent magnets are aligned in a circumferential direction along the circumference and are uniformly distributed and aligned along the straight line in the axial direction.

4. The outer rotor according to claim 3 in which the length of the permanent magnet in the axial direction is between 30-95mm, and the thickness of the permanent magnet is between 8-18mm.

5. The outer rotor according to claim 4 in which the spacing between the adjacent permanent magnets is provided with a fixing strip with an axial extension, the fixing strip is fixedly connected with the rotor shell, and the circumferential sides of the fixing strip are respectively pressed on the circumferential side surface of the adjacent permanent magnet.

6. The outer rotor according to claim 5 in which the cross section shape of the fixing strip is rectangular, trapezoidal, circular or elliptical, and the fixing strip is fixed on the rotor shell by the way of screw fastening, sticking or inserting.

7. The outer rotor according to claim 5 in which a strip fastening spacing is left between the fixing strip and the inner wall of rotor shell, the fastening spacing of the strip is empty or the spacing is filled with non-magnetic binder, or a non-magnetic pad is arranged in the strip fastening spacing.

8. The outer rotor according to claim 1,2,3,4,5,6 or 7 in which the outer circumference of the permanent magnet cross section in the radial direction is centered and located on circular arc shape on the axis of the rotor shell, and the inner edge of the cross section of the permanent magnet in the radial direction is of any of the following forms:
(1) The inner edge is a circular arc, and the center of the arc is located on the axis of the rotor shell, and both ends of the inner edge are directly connected with the corresponding circumferential side of the cross section of the permanent magnet;
(2) The inner edge is a circular arc, and the radius is equal to the radius of the outer edge and the center of the circle is located on the extension line of the connecting line between the midpoint of the outer edge and the center of the outer edge, both ends of the inner edge are directly connected to the respective circumferential sides of the cross section of the permanent magnet;
(3) The inner edge is a circular arc, and the center is located on the axis of rotor shell, and both ends of the inner edge are connected to respective circumferential side edges of the cross section of the permanent magnet by a small concave circular arc;
(4) The inner edge is a circular arc, and the radius is equal to the radius of the outer edge, and the center of the circle is located on the extension line of the connecting line between the midpoint of the outer edge and the center of the outer edge, both ends of the inner edge are connected to the respective circumferential side edges of the cross section of the permanent magnet by a small concave circular arc.

9. A low speed high torque motor comprising: an outer rotor and a stator, the stator includes a central shaft, a stator core fixedly mounted on the central shaft and a stator winding fixedly mounted on the stator core, the outer rotor is an outer rotor according to an arbitrary rotor above claim 1-8, both ends of the rotor shell are fixedly provided with a fixing plates, the fixing plate is connected with the said central shaft through the corresponding rotor bearing, the right end of the central shaft is extended from the corresponding end bearing and fixedly mounted on the right rigid support, the right rigid support is provided with a shaft mounting hole, the right end of the central shaft is inserted into the shaft mounting hole on the right rigid support and an anti rotation structure is arranged between the central shaft and the right rigid support.

10. The ultralow speed high torque motor according to claim 9 in which the stator core is provided with a stator slot for embedding the winding, the stator slot is a pear-shaped slot, the notch size is between 2.5-4.5mm, and the pitch of the winding is 1.

11. The ultra low speed high torque motor according to claim 10 in which the stator is provided with 8-pole/9-slot, 10-pole/12-slot, 20-pole/24-slot, 30-pole/36-slot, 22-pole/24-slot, 16-pole/18-slot or 32-pole/36-slot, the pole arc coefficient is 0.8-0.9, and the permanent magnet is made of Nd-Fe-B material with a length of 30-95mm and a thickness of 8-18mm.

12. The ultra low speed high torque motor according to claim 11 in which the stator is provided with a stator temperature sensor for collecting temperature signals in the stator.

13. The ultra low speed high torque motor according to claim 9,10,11 or 12 in which the motor is provided with an inner cooling structure, which comprises any one of the following cooling ducts or any combination of a plurality of cooling ducts:
(1) The center axis is a hollow shaft, and the shaft hole of the central shaft constitutes an axially cooled shaft inner cooling duct;
(2) An annular gap is arranged between the outer side surface of the stator core and the inner surface of the outer rotor; the annular gap constitutes a stator external cooling stator external cooling duct;
(3) The stator core is provided with an axial through-hole, and the axial through-hole constitutes a stator inner cooling stator inner cooling duct; an axial through-hole in the stator core is formed by the connection of a corresponding radiating air duct hole punched from stator punching sheet comprising the stator core;
The ventilation of the above-mentioned cooling ducts is natural ventilation and / or forced ventilation.

14. The ultra low speed high torque motor according to claim 13 in which the inner cooling structure uses any of the following forced ventilation structures:
(1) When the inner cooling structure is a shaft inner cooling duct, the shaft hole of the center axis is provided with a shaft inner ventilating fan, the shaft inner ventilation fan is an shaft inner breeze fan located on center axis hole at the air inlet end and/or shaft inner exhaust fan located on central shaft hole at the air outlet end;
(2)When the inner cooling structure includes a shaft inner cooling duct and includes the stator external cooling duct and / or stator inner cooling duct, the two ends of the stator core are respectively provided with a gap between the two ends of the stator core and the fixed plate at the corresponding end that constitutes the uniform pressure air gap zone of the end, the two ends of the stator external cooling duct and / or the stator inner cooling duct of the stator are respectively connected with the uniform pressure air gap zone of the end at the corresponding end, the side walls of both ends of the center axis are respectively provided with a shaft hole connecting with center shaft and side hole of center shaft connecting with the uniform pressure air gap zone of the end at the corresponding end, one end of the shaft hole of the center axis is closed, and the other end is provided with an shaft inner ventilation fan, the shaft inner ventilation fan is an shaft inner breeze fan located on center axis hole at the air inlet end and/or shaft inner exhaust fan located on central shaft hole at the air outlet end; the shaft inner ventilation fan is located at the outer side of side hole of center axis at the corresponding end;
(3) When the inner cooling structure includes an stator external cooling duct and / or stator inner cooling duct, and includes or does not include the shaft inner cooling duct, the two ends of the stator core are respectively provided with a gap between the two ends of the stator core and the fixed plate at the corresponding end that constitutes the uniform pressure air gap zone of the end, the two ends of the stator external cooling duct and / or stator inner cooling duct of the stator are respectively connected with the uniform pressure air gap zone of the end at the corresponding end, the fixed plate of the air outlet end is provided with an air outlet air duct connecting with the uniform pressure air gap zone of the end at the air outlet end, the quantity of the air outlet duct is one or more, the fixed plate of the air inlet end is provided with an air inlet air duct connecting with the uniform pressure air gap zone of the end at the air inlet end, the quantity of the air inlet duct is one or more, an air inlet air pump is connected in series with the air inlet duct, and an air inlet check valve is provided with the air inlet duct at both ends of the air inlet air pump, the air inlet air pump includes a cylinder body, and the cylinder body is axially installed the corresponding fixing plate, the cylinder body is provided with a piston matched with the cylinder body, the piston is connected with a piston rod extending into the inner side of the fixing plate, the cavity of the cylinder body is divided into a rod cavity and a rodless cavity by the piston, the rod cavity is positioned on the inner side of the rodless cavity, the center axis is provided with multistage cam which is located in the uniform pressure air gap zone of the end at the inlet end and constitutes a cam mechanism with the piston rod, when the multistage cam rotates, the piston rod is pushed to move back and forth, the inlet and the outlet of the air inlet air pump are arranged at the bottom of the rodless cavity, when it also comprises a shaft inner cooling duct, the side walls of the center axis of the air inlet end and/or the air outlet end are respectively provided with a shaft hole connecting with center shaft and side hole of center shaft connecting with the uniform pressure air gap zone of the end at the corresponding end, the shaft hole of the center axis of the air inlet end is closed, partially closed or not closed.

15. The ultra low speed high torque motor according to claim 9,10,11 or 12 in which the left end of the rotor shell is connected with an encoder, and the connection mode is any of the following:
(1) The encoder is an outer rotor encoder, which comprises an inner sleeve and an outer sleeve connected with each other, the left end of the center axis is extended from the rotor bearing which is connected with the center axis and is fixedly arranged on the left rigid support, the left rigid support is provided with a shaft mounting hole, the left end of the center axis is inserted into the shaft mounting hole of the left rigid support and is provided with an anti-rotating structure for preventing relative rotation between the center shaft and the left rigid bearing, the inner sleeve is fixedly connected with the left end of the center axis, the outer sleeve is fixedly connected with the fixing plate at the left end, the center axis, the rotor shell, the inner sleeve and the outer sleeve are coaxial;
(2) The encoder is an inner rotor encoder and is provided with a stepped shaft and a bearing support for the connection, comprising inner and outer sleeves connected to each other, a stepped shaft for the connection is mounted on the bearing support through an outer bearing, the right end of the stepped shaft for the connection is provided with a radial flange, the radial flange is coaxially fixed on the fixed plate at the left end, the inner sleeve of the encoder is fixed on the left end part of the stepped shaft for the connection or is coaxially connected with the left end of the stepped shaft for the connection through a coupling, the outer sleeve of the encoder is fixedly connected with the bearing support through a connecting piece, the outer bearing is preferably a single row or double row aligning bearing.

16. The ultra low speed high torque motor according to claim 15 in which the rigid support adopts any of the following:
(1) The mounting hole of the shaft on the rigid support is a polygon hole, and the center axis section of the corresponding end of the shaft that they are connected to is of the same polygonal shape, the shaft mounting hole is interference fit or transition fit with the center axis segment inserted therein, the corresponding polygonal structure constitutes anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(2) The mounting hole of the shaft on the rigid support is a cylindrical hole, the center axis section of the corresponding end is cylindrical, the rigid support is provided with a plurality of pins through holes penetrating the side wall of shaft mounting hole, the corresponding shaft segments of the center axis are provided with a plurality of pin blind holes respectively intervening with the plurality of pins through holes, the pin or pin shaft and its supporting structure constitute the anti-rotating structure;
(3) The mounting hole of the shaft on the rigid support is a cylindrical hole, the center axis section of the corresponding end is cylindrical, a plurality of keys are arranged between the shaft mounting hole and the center axis segment inserted into the shaft mounting hole, the key and its supporting structure constitute the anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(4) The mounting hole of the shaft on the rigid support is a drum hole, and the center axis section of the corresponding end of the shaft that they they are connected to is of the same drum-shape, the shaft mounting hole is interference fit or transition fit with the center axis segment inserted therein, the corresponding drum-shaped structure constitutes anti-rotating structure, the shaft mounting hole is directly arranged on the body of the rigid support or is arranged on the adjusting sleeve, when the shaft mounting hole is arranged on the adjusting sleeve, the outer edge of the adjusting sleeve is cylindrical, the shaft mounting hole is arranged at the center of the adjusting sleeve, the body of the rigid support is provided with an adjusting sleeve mounting hole corresponding to the outer edge of the adjusting sleeve, the adjusting sleeve is inserted on the adjusting sleeve mounting hole and is interference fit or transition fit with the adjusting sleeve mounting hole, and it is provided with or without the fastening bolts;
(5) The mounting hole of the shaft on the rigid support is a splined hole, and the center axis section of the corresponding end of the shaft that they they are connected to is spline shaft, the spline structure adopted between the two constitutes the anti-rotating structure.

17. The ultra low speed high torque motor according to claim 9,10,11 or 12 in which the stator is provided with a stator temperature sensor for collecting the temperature signal within the stator, the real time temperature in the stator is acquired by the stator temperature sensor, and the fatigue state of the motor is determined based on the collected real time temperature in the stator, and the upper limit of the operating temperature corresponding to the temperature acquisition portion of the stator temperature sensor is set, when the temperature measured by the corresponding stator temperature sensor reaches or exceeds the corresponding upper limit of the operating temperature, it is judged that the motor is tired and is controlled to stop, when the temperature measured by the corresponding stator temperature sensor is lower than the corresponding upper limit of the operating temperature, it is judged that the motor is not tired and the motor is allowed to work.

18. The ultra low speed high torque motor according to claim 9,10,11 or 12 in which the current signal acquisition device for on-line obtaining motor current is provided, the current signal acquisition device is a current sensor for collecting the current input signal of the stator winding and / or a frequency converter which can output the current output signal, the current signal acquisition device is used to obtain the current signal, the current signal is used as the load sensing signal or the load data is calculated and obtained by the current signal.

19. The ultra low speed high torque motor according to claim 9,10,11 or 12 in which the voltage signal acquisition device for on-line obtaining motor voltage is provided, the voltage signal acquisition device is a voltage sensor for collecting the voltage input signal of the stator winding and/or a frequency converter which can output the voltage output signal, the voltage signal acquisition device is used to obtain the voltage signal, and the voltage signal is used as the sensing signal of the rotating speed or the speed data is calculated and obtained by the voltage signal.

20. The crane which comprises the ultra low speed high torque motor required by any claim in the claim 9-19, the rotor shell of the ultra low speed and high torque motor is used as a reel of the hoisting mechanism of the crane, which is used for connecting and winding the wire rope of the hoisting mechanism.

21. The crane according to claim 20 in which the fixed plate at one end of the motor is connected with the rotary encoder, and the fixed plate of the other end is provided with a disc brake which is matched with the brake caliper device, this fixed plate constitutes a brake disc, a flange radially extending beyond the shell circumference of the outer rotor or a brake flange fixedly connected to the fixed plate matches with the friction block of brake caliper device.
